# EUROPÄISCHE PATENTSCHRIFT

(11) **EP 0 387 400 B1**
(45) Veröffentlichungstag und Bekanntmachung des Hinweises auf die Patenterteilung: **10.08.1994**
(21) Anmeldenummer: 89118176.0
(22) Anmeldetag: 30.09.1989
(51) Int. Cl.: B64C 1/10

(54) **Druckspant**
Bulkhead
Cadre étanche

(30) Priorität: 19.07.1989 DE 3923871; 28.02.1989 DE 3906170
(43) Veröffentlichungstag der Anmeldung: 19.09.1990
(73) Patentinhaber: DORNIER LUFTFAHRT GMBH, D-88003 Friedrichshafen (DE)
(72) Erfinder: Benz, Detlef, Dipl.-Ing., D-7997 Immenstaad (DE); Hager, Peter, Dipl.-Ing., D-7990 Friedrichshafen (DE); Müller, Josef, Dipl.-Ing., D-7778 Markdorf (DE); Pönitzsch, Werner, Dr.-Ing., D-7990 Friedrichshafen (DE); Reichle, Anton, D-7758 Stetten (DE); Roth, Siegfried, Dipl.-Ing., D-7777 Mittelstenweiler (DE); Teske, Reiner, Dipl.-Ing., D-7778 Markdorf (DE); Zimmermann, Peter, Dipl.-Ing., D-7990 Friedrichshafen (DE)
(74) Vertreter: Landsmann, Ralf, Dipl.-Ing.

(56) Entgegenhaltungen:
- DE-A- 3 010 958
- FR-A- 2 001 634

## Beschreibung

Die Erfindung betrifft einen Druckspant aus Faserverbundwerkstoff für den Druckrumpf eines Flugzeugs.

Gegenwärtig werden die Druckspante, die den Abschluß einer bedruckten Flugzeugzelle bilden, aus Metall (meistens Alu-Legierung und Titan) in differenzierter Bauweise hergestellt. Aus Sicherheitsgründen werden Rißstopper eingebaut, da die verwendeten Metalle eine relativ ungünstige Rißfortschrittsgeschwindigkeit aufweisen. So besteht beispielsweise der zukünftige Druckspant des Airbus A330/A340 aus ca. 50 Einzelteilen.

Das Flugzeug Beechcraft Starship der amerikanischen Beech Aircraft Corporation hat einen Druckrumpf aus Faserverbundwerkstoff. Der hintere Druckspant besteht aus einer ebenen Sandwichplatte (Wabenkern mit zwei Deckplatten) aus Kunststoff. Zur Stabilisierung sind aufgebrachte Aussteifungen (Rippen) notwendig.

Aufgabe der Erfindung ist es, einen Druckspant vorzuschlagen, der leicht ist, billig herzustellen und einfach einzubauen.

Diese Aufgabe wird erfindungsgemäß gelöst von einem Druckspant mit den Merkmalen des Anspruchs 1. Ausführungen der Erfindung sind Gegenstände von Unteransprüchen.

Erfindungsgemäß wird ein insbesondere monolithischer Druckspant mit einem ungleichförmigen, am Rand steifer als im mittleren Bereich ausgebildeten Faserlagenaufbau in einer Kalotten- bzw. durch elliptische oder ovale Querschnittslinien bestimmten Hohlkörperform verwendet, der eine hohe Stabilität bei geringem Materialverbrauch und damit geringem Gewicht besitzt, wobei im Übergang zum Druckrumpf die für Fasermaterialien ungünstigen rechten Winkel vermieden werden. Möglich ist eine Ausführung mit durchgehend gleicher Wandstärke, die aus unterschiedlichen Materialien (Hybridbauweise) hergestellt sein kann. An den besonders beanspruchten Randbereichen werden bevorzugt weitere Lagen von Faserverbundwerkstoff integriert, die aus einer besonders steifen Faserart. z.B. Kohlefasern, bestehen.

In einer Ausführungsform mit unterschiedlichen Faserverbundmaterialien wird der Druckspant im mittleren Druckspantbereich aus elastischeren Materialien als im Randbereich hergestellt. Die elastischen Materialien, z.B. Aramidfasern, können bei Verletzungen (Beschuß, Kerben) einen Rißfortschritt verhindern. Um Verbindungselemente einzusparen, kann der gesamte Druckspant "insitu" (d.h. in einem Arbeitsgang) im Autoklaven ausgehärtet werden.

Das günstige Rißfortschrittverhalten von Faserverbundwerkstoff, die Vielfalt der Variationsmöglichkeiten hinsichtlich Faserauswahl und der örtlichen Verstärkungsmatrix, verbunden mit der Möglichkeit der Insitu-Aushärtung, stellen technische Merkmale dar, die gegenüber einer Metallbauweise erhebliche Vorteile besitzen.

Dies sind u.a.
- Reduzierung der Herstellkosten um ca. 60 %
- Reduzierung des Gewichts ca. 40 %
- höhere Lebensdauer
- bessere Damage-Tolerance Bedingungen
- keine Abdicht- und Dichtigkeitsprobleme
- geringerer Fertigungsmittelaufwand
- geringere Prüfkosten
- kürzere Durchlaufzeiten
- geringerer Investitionsaufwand.

Der Druckspant hat die Form einer Kalotte oder eines aus elliptischen oder ovalen Querschnittslinien bestimmten Hohlkörpers, die an ihren Rändern vorzugsweise eine stärkere Krümmung als im Mittelteil aufweist, so daß der Rand parallel zum Flugzeugrumpf verläuft, wodurch sich eine einfache, dem organischen Material angepaßte Befestigungsmöglichkeit (Einkleben, Einnieten) ergibt. Der Rand kann also - entsprechend dem Querschnitt des Flugzeugrumpfs - Zylinderform, Kegelform oder Ellipsenform oder eine ähnliche Form aufweisen. Die Kegelform eignet sich besonders für den hinteren Druckspant, weil in diesem Bereich in der Regel der Flugzeugrumpf konisch zusammengeführt wird.

Die Verstärkungen am Rand werden bevorzugt durch Einlagerung weiterer Faserschichten hergestellt. Dabei werden Fasern verwendet, die die Steifigkeit erhöhen, z.B. Kohlefasern. Der Rand kann beispielsweise mehr als doppelt so stark ausgebildet sein wie der mittlere Druckspantbereich. Verstärkungen (Aufdickungen) können auch zusätzlich an anderen Stellen vorgesehen sein, wodurch der Druckspant den jeweiligen Anforderungen angepaßt werden kann. Diese können als Stringer oder Profile aufgesetzt oder durch Füllmaterial realisiert sein, z.B. durch Faservliese oder Schäume, die sich zwischen Faserverbundwerkstoffschichten befinden, dem Werkstoff eine höhere Dicke und damit Steifigkeit geben, aber durch die Werkstoffauswahl das Gewicht des Bauteils nur unwesentlich erhöhen.

Die Fasern können praktisch in allen bekannten Gewebearten verwendet werden: Gewebe, Gewirk oder unidirektionale Gelege. Durch Verdrehen der einzelnen Fasergelege gegeneinander, derart, daß die Faserlängsrichtung der einen Schicht mit derjenigen der Nachbarschicht einen gewissen Winkel einschließt, ergibt sich so ein homogener Faserlagenaufbau. Möglich ist auch eine Mischbauweise, bei der Gewebe und unidirektionale Materialien nebeneinander verwendet werden. So kann z.B. der größte Bereich des Druckspants aus Gewebe aufgebaut sein, während die Verstärkungsringe aus unidirektionalen Fasern aufgebaut sind.

Als Fasermaterialien und als Harzmaterialien können alle für den Flugzeugbau bekannten Stoffe eingesetzt werden. Als besonders geeignet hat sich erwiesen: Aramidfasern für den Mittelbereich und für den Rand wegen seiner Zähigkeit und der guten Elastizität, wodurch ein verbessertes Rißfortschrittverhalten erzielt wird, sowie Einlagern von Kohlefasern am Rand, die dort die Steifigkeit erhöhen.

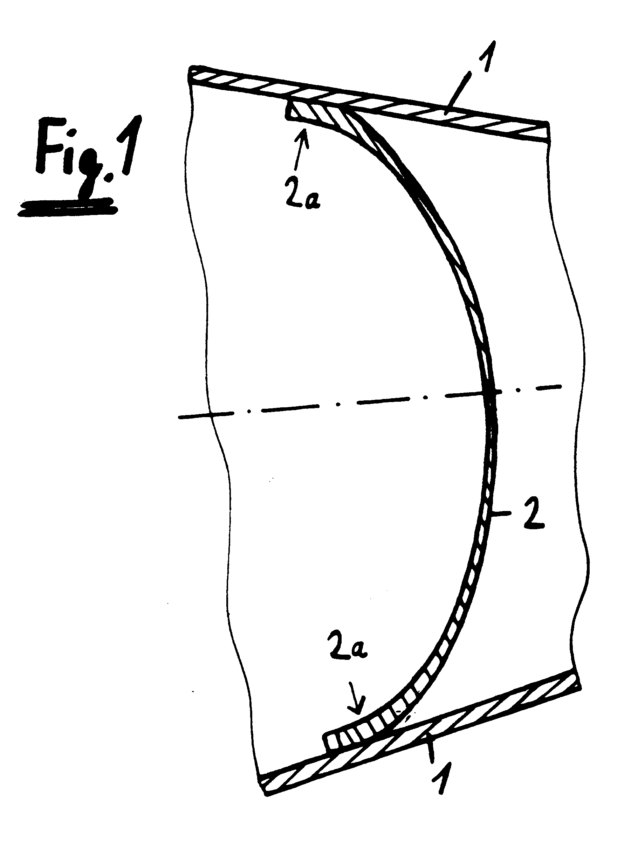

Die Erfindung wird anhand von acht Figuren näher erläutert, die jeweils einen erfindungsgemäßen Druckspant oder Teile davon zeigen. Figur 1 zeigt schematisch den Schnitt durch einen Heckabschnitt eines Flugzeugs, bei dem der Rumpf 1 konisch zusammenläuft. Der Druckspant 2 hat im wesentlichen eine Kalottenform. Die der Druckkabine zugewandte Seite (links) ist konkav. An den Rändern 2a weicht die Form in dieser Ausführung von der Kalotte ab und ist dem Rumpfquerschnitt angepaßt, sie verläuft parallel dazu, wodurch eine leichte Befestigung durch Nieten, Verschweißen oder Verkleben am Rumpf erfolgen kann.

Der Druckspant 2 ist an den Randbereichen 2a durch Einlagern weiterer Faserschichten verstärkt. In einer konkreten Ausführung hat der Druckspant 2 einen Durchmesser von 1.950 mm, einen Krümmungsradius in der Mitte von etwa 1.500 mm und eingelagerte Verstärkungen auf den äußeren ca. 250 mm. In der Mitte ist der Druckspant 2 aus 10 Lagen Aramidfasern aufgebaut, am Rand sind zusätzlich 14 Lagen CFK eingearbeitet.

Bevorzugt wird der Druckspant 2 in seiner Mitte aus 5 bis 15 Schichten hergestellt. Als Randverstärkungen werden bevorzugt 10 bis 20 Lagen hinzugefügt. Die Lagen bzw. Schichten haben jeweils eine in an sich bekannter Weise aufgrund der vorliegenden Spannungsverteilung optimierte Dicke.

Möglich, aber nicht gezeigt, sind Ausführungen des Druckspants mit Aussteifungen, die je nach Anforderung aufgebracht werden können. Diese können zum einen durch Integration weiterer Faser-/Harz-Schichten erfolgen (Aufdickungen) oder zum anderen durch Aufbringen von Stringern, Spanten oder Profilen beliebiger Art.
Das Aufbringen kann in einem Arbeitsgang - Insitu - erfolgen oder nachträglich durch herkömmliche Verbindungsmittel, z.B. durch Kleben oder Mieten. Bei dem kalottenförmigen Druckspant können z.B. Aussteifungsprofile in radialer Richtung auf die konvexe Seite des Hohlkörpers aufgebracht werden. Eine - nicht gezeigte - Ausführung enthält z.B. acht Versteifungen, die radial angeordnet sind, den Mittelbereich frei lassen und zum Rand des Bauteils führen.

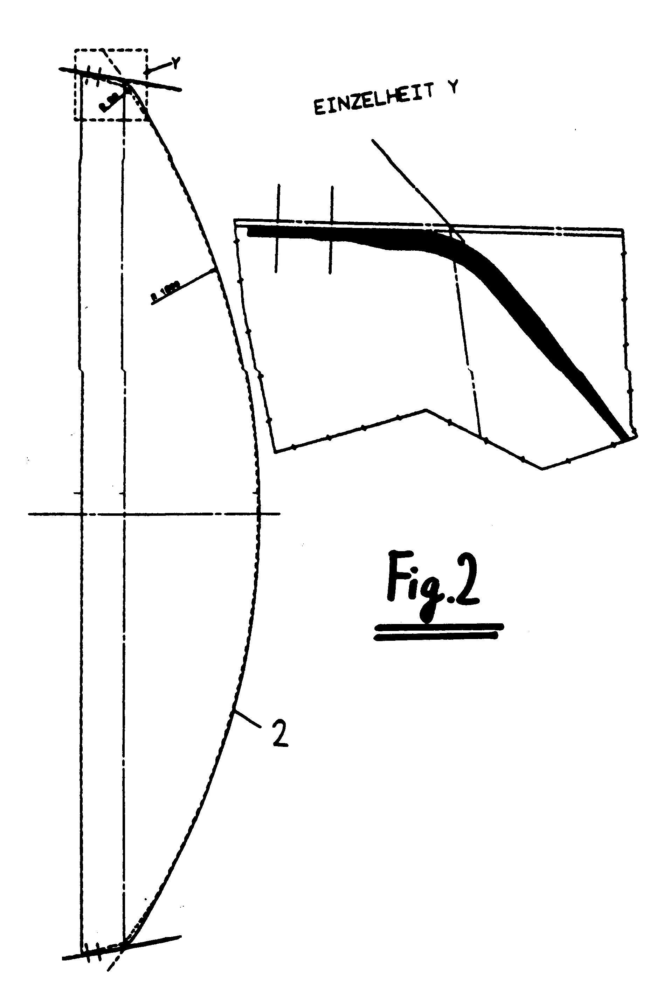

Figur 2 zeigt einen erfindungsgemäßen Druckspant 2, der hier einen Krümmungsradius von 1.500 mm hat. Im Randbereich ist er verstärkt und stärker gekrümmt, wie Einzelheit Y zeigt. Der Radius beträgt dort 50 mm. Die Kalotte hat folgenden Lagenaufbau: 50 % SFK (Aramidfasern) in Umfangsrichtung, 50 % SFK in radialer Richtung. Der Randbereich (Einspannbereich) hat folgenden Lagenaufbau: SFK mit innenliegender CFK (Kohlefaser)-Verstärkung.

Figur 3 zeigt nochmals ein Detail eines erfindungsgemäßen Druckspants 2. Der Randbereich ist unterteilt in die Bereiche A, B und C und wie folgt ausgeführt:
- Bereich A):: Reine Zugbeanspruchung - primär Anteile an Aramidfasern (entsprechend Kesselformel) in Umfangs- und Längsrichtung.
- Bereich B):: Primär Zug-überlagert mit Biegebeanspruchung - Aramidfasern. Durch große Dicke "d" wurde das Widerstandsmoment erhöht, so daß die Aramidfasern nur gering mit Druck beaufschlagt werden.
- Bereich C):: Druckbeanspruchung - Kohlefasern unidirektional in Umfangsrichtung. Wegen der unterschiedlichen Steifigkeiten von Kalotte (Aramidfasern) und Aussteifung (CFK) können die konzentrisch wirkenden Stützkräfte vom integrierten Randring aufgenommen werden. Sie bilden mit den Umfangskräften am Randring ein statisches Gleichgewichtssystem.

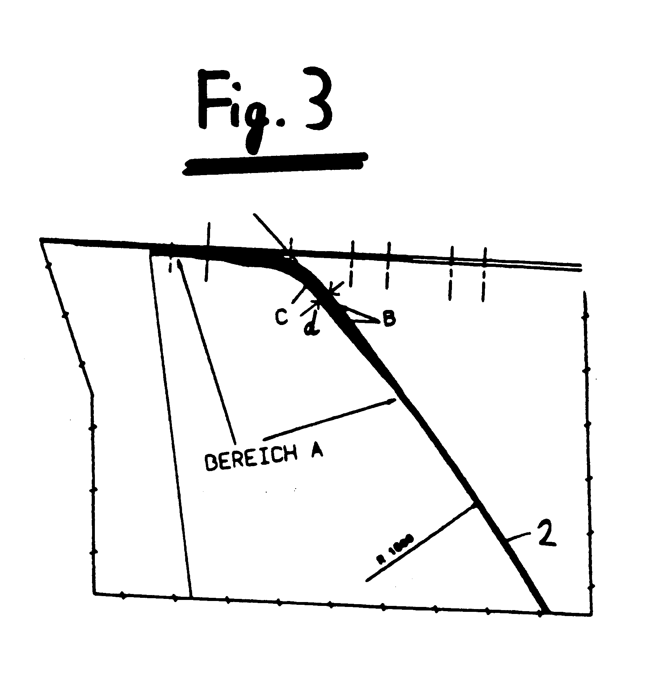

Anhand von Figur 3 ist der erfindungsgemäße Lösungsgedanke, der Ausnutzung unterschiedlicher Fasern mit deren spezifischen Eigenschaften in einem Fasermisch-Verbund, gut zu erkennen. Anstelle eines separaten Versteifungsringes ist die Aussteifung in den Verbund integriert.

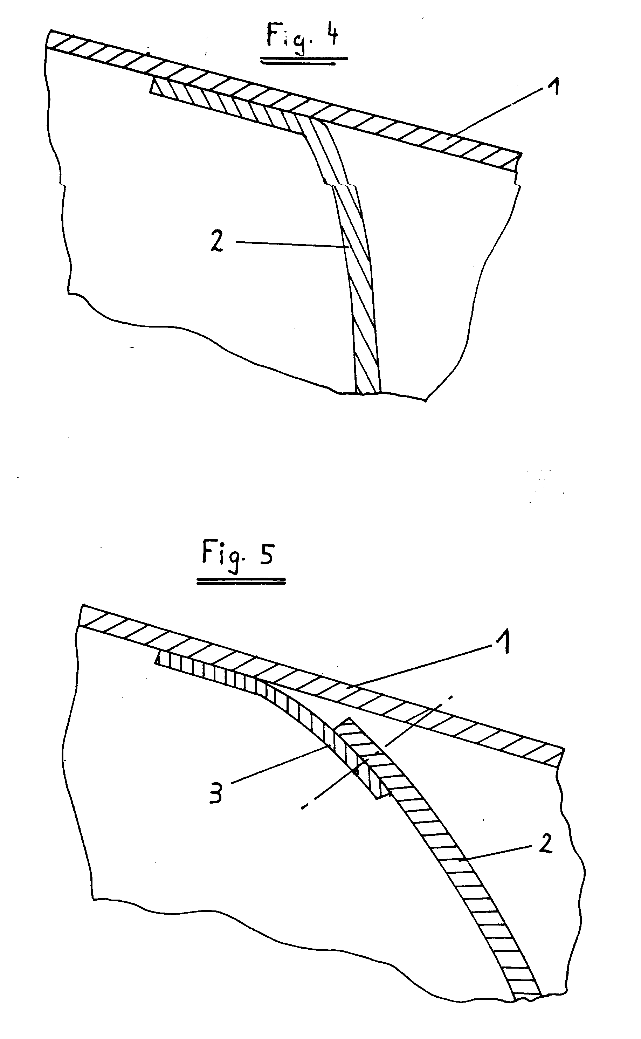

Figur 4 zeigt eine Ausführung, bei der ein Druckspant 2 mit durchgehend gleicher Dicke verwendet wird. Dieser Druckspant hat in seinem Randbereich einen Knick, der relativ nahe an der Außenhaut des Rumpfes 1 liegt. Durch den relativ langen Randbereich des Druckspants 2, der parallel zum Rumpf 1 verläuft, sind hier günstige Befestigungsmöglichkeiten gegeben.

Figur 5 zeigt eine Ausführung eines Druckspants 2, bei dem die Randbefestigung mit einem Übergangsstück 3 gelöst ist. Der Druckspant 2 weist hier Kalottenform auf, das Übergangsstück 3 weist hier einen Knick auf und verläuft mit einem Schenkel parallel zum Rumpf 1 und mit dem anderen Schenkel parallel zum Randbereich des Druckspants 2. Eine Befestigungsmöglichkeit zwischen Druckspant 2 und Übergangsstück 3 ist strichpunktiert angedeutet.

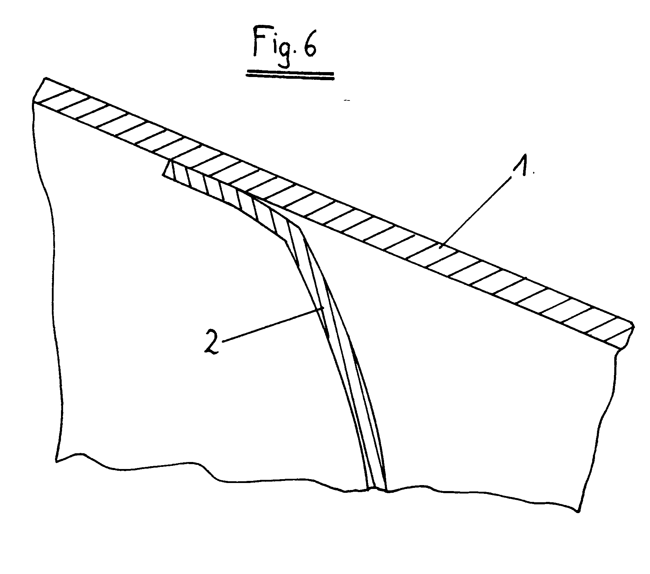

Figur 6 zeigt eine weitere Ausführungsform, bei der ein Druckspant, hier ebenfalls wieder mit einheitlicher Dicke, mit einem Knick versehen ist, um eine Anlagefläche am Rumpf 1 anzubieten. Der Knick ist hier, im Gegensatz zu der Ausführungsform der Figur 4, nicht direkt am Rumpf 1 angeordnet, sondern etwas weiter in der Mitte des Flugzeugs, wodurch ein Teil des Randbereichs in spitzem Winkel zur Außenhaut des Rumpfs 1 verläuft.

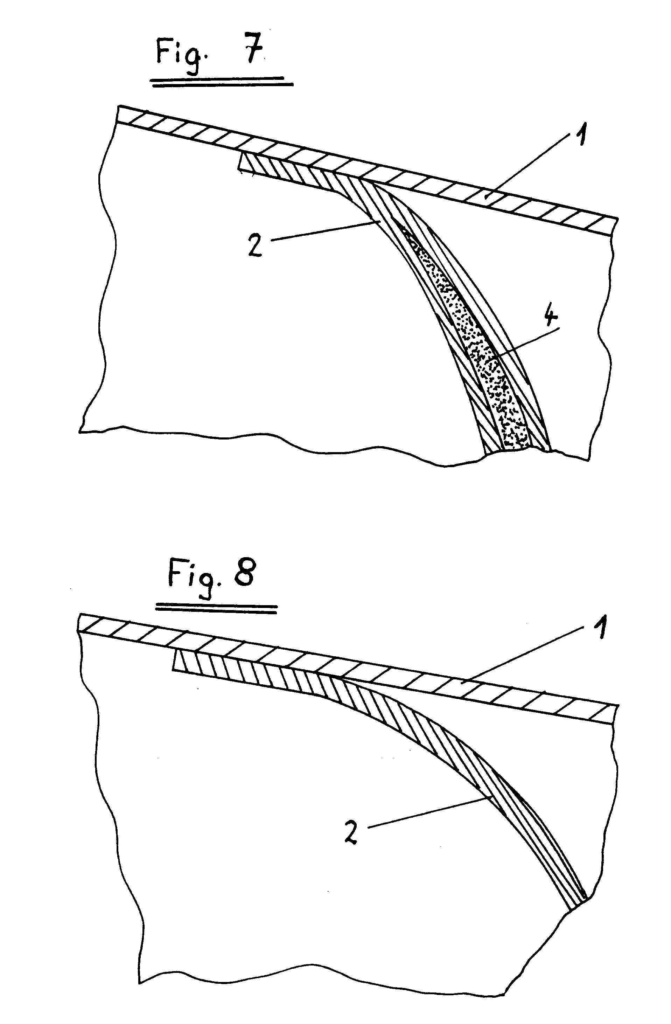

Figur 7 zeigt eine Ausführungsform mit einer Aufdickung 4 im Kalottenbereich, die hier durch Einlagerung eines leichten Stoffes, z.B. eines Faservlieses oder eines Schaummaterials oder eines Wabenkerns, ausgebildet ist. Diese Ausführungsform weist aufgrund ihrer erhöhten Dicke eine besonders hohe Steifigkeit auf. Der Gewichtszuwachs durch die Einlagerung der Aufdickung 4 kann durch Auswahl eines geeigneten Materials klein gehalten werden.

Figur 8 zeigt eine Ausführungsform eines Druckspants 2 mit durchgehend gleichmäßiger Dicke. Der Übergang von der Kalotte zum Rand ist hier fließend. Ein solcher Druckspant ist in der Fertigung besonders einfach herstellbar. Bei dieser Ausführung mit gleichmäßiger Dicke wird eine Mischbauweise vorgesehen, bei der im Randbereich teilweise oder ganz andere Materialien als im Kalottenbereich verwendet werden.

Durch die Verwendung schwer entflammbarer oder schwer brennbarer oder nicht brennbarer Materialien, insbesondere CFK kann der Druckspant als Brandspant bzw. Brandschottspant verwendet werden.

Außer im Flugzeugbau kann die Erfindung auch bei anderen Druckbehältern, wie Tanks, Großkesseln oder Containern, eingesetzt werden.

## Patentansprüche

1. Flugzeug-Druckspant (2), bestehend aus einer Faserverbundstruktur mit einer durch elliptische, ovale und/oder kreisbogenförmige Querschnittslinien bestimmten Hohlkörperform und einem ungleichförmigen, im Randbereich (2a) steifer als im mittleren Druckspantbereich ausgebildeten Faserlagenaufbau.

2. Flugzeug-Druckspant (2) nach Anspruch 1,
**dadurch gekennzeichnet,** daß
die Faserverbundstruktur im Randbereich (2a) in eine dem Flugzeugquerschnitt entsprechende Form übergeht.

3. Flugzeug-Druckspant (2) nach Anspruch 2,
**dadurch gekennzeichnet,** daß
der Übergang
- fließend ausgebildet ist oder
- mit einem Knick am Druckrumpf (1) oder
- mit einem Knick vor dem Druckrumpf, so daß der Randbereich der Faserverbundstruktur im spitzen Winkel zum Druckrumpf läuft

4. Flugzeug Druckspant (2) nach Anspruch 1,
**dadurch gekennzeichnet,** daß
die Faserverbundstruktur mit dem Druckrumpf (1) durch ein zwischen diese eingesetztes Übergangsstück (3) verbunden ist.

5. Flugzeug-Druckspant (2) nach einem der vorhergehenden Ansprüche,
**dadurch gekennzeichnet,** daß
die Faserverbundstruktur im Randbereich (2a) zylinder-, kegel- oder ellipsoidförmig ausgebildet ist

6. Flugzeug-Druckspant (2) nach einem der vorhergehenden Ansprüche,
**dadurch gekennzeichnet,** daß
die Faserverbundstruktur im Randbereich (2a) durch Einlagerung zusätzlicher Faserschichten verstärkt ist.

7. Flugzeug-Druckspant (2) nach einem der vorhergehenden Ansprüche,
**dadurch gekennzeichnet,** daß
die Faserverbundstruktur im Randbereich (2a) steife Verstärkungsfasern (Carbonfasern) und im mittleren Druckspantbereich relativ elastische Verstärkungsfasern (Aramidfasern) enthält.

8. Flugzeug-Druckspant (2) nach einem der vorhergehenden Ansprüche,
**dadurch gekennzeichnet,** daß
die Faserverbundstruktur im Randbereich (2a) durch unidirektional in Umfangsrichtung verlaufende Verstärkungsfasern versteift ist.

9. Flugzeug Druckspant (2) nach einem der vorhergehenden Ansprüche,
**dadurch gekennzeichnet,** daß
die Faserverbundstruktur auch außerhalb des Randbereichs (2a) mit Verstärkungen oder Aufdickungen versehen ist.

10. Flugzeug-Druckspant (2) nach einem der vorhergehenden Ansprüche,
**gekennzeichnet dadurch**
Einlagerung eines Füll-, insbesondere Schaumstoffmaterials (4) zur Aufdickung der Faserverbundstruktur.

11. Flugzeug-Druckspant (2) nach einem der vorhergehenden Ansprüche,
**dadurch gekennzeichnet,** daß
die Faserverbundstruktur aus einem schwer entflammbaren bzw. schwer brennbaren Faserverbundmaterial (Carbonfaser-Verbundwerkstoff) besteht oder mit einem solchen Material (Metallfolien) beschichtet ist.

## Claims

1. An aircraft pressure frame (2) comprising a fibre-composite structure with a hollow-body form defined by elliptical, oval and/or arced cross-sectional lines, and an irregular fibre-layer structure which is stiffer in the edge area (2a) than in the central area of the pressure frame.

2. An aircraft pressure frame (2) according to claim 1, **characterised in that** the fibre-composite structure transits in the edge area (2a) into a form which corresponds with the aircraft cross-section.

3. An aircraft pressure frame (2) according to claim 2, **characterised in that** the transition
- is arranged to be flowing, or
- with a kink at the pressure fuselage (1), or
- with a kink in front of the pressure fuselage, so that the edge area of the fibre-composite structure extends at an acute angle to the pressure fuselage.

4. An aircraft pressure frame (2) according to claim 1, **characterised in that** the fibre-composite structure is connected to the pressure fuselage (1) by a transitional element (3) inserted thereinbetween.

5. An aircraft pressure frame (2) according to one of the above claims, **characterised in that** the fibre-composite structure is of cylindrical, conical or elliptical shape in its edge area (2a).

6. An aircraft pressure frame (2) according to one of the above claims, **characterised in that** the fibre-composite structure is in its edge area (2a) reinforced by placing additional fibre layers.

7. An aircraft pressure frame (2) according to one of the above claims, **characterised in that** the fibre-composite structure includes in the edge area (2a) stiff reinforcement fibres (carbon fibres) and in the middle area of the pressure frame relatively elastic reinforcing fibres (aramide fibres).

8. An aircraft pressure frame (2) according to one of the above claims, **characterised in that** the fibre-composite structure in the edge area (2a) is reinforced by reinforcing fibres which extend unidirectionally in the peripheral direction.

9. An aircraft pressure frame (2) according to one of the above claims, **characterised in that** the fibre-composite structure is also outside the edge area (2a) provided with reinforcements or thickenings.

10. An aircraft pressure frame (2) according to one of the above claims**, characterised by** inclusion of a filler material, in particular a foam material (4), for thickening the fibre-composite structure.

11. An aircraft pressure frame (2) according to one of the above claims, **characterised in that** the fibre-composite structure is either composed of a fibre-composite material of low inflammability and low combustibility (carbon fibre composite material) or covered in a material of said characteristics (metal foil).

## Revendications

1. Couple étanche (2) d'avion formé d'une structure composite renforcée par fibres en forme de corps creux dont la section transversale est définie par des lignes en forme d'ellipse, d'ovale et/ou d'arc de cercle et d'un empilage non régulier de couches de fibres, plus rigide dans la région du bord (2a) que dans la région médiane du couple étanche.

2. Couple étanche (2) d'avion selon la revendication 1, caractérisé par le fait que, dans la région du bord (2a), la structure composite renforcée par fibres évolue vers une forme qui correspond à la section transversale de l'avion.

3. Couple étanche (2) d'avion selon la revendication 2, caractérisé par le fait que la transition
- est progressive ou
- forme un angle au niveau du fuselage (1) étanche ou
- forme un angle avant le fuselage de telle sorte que la région du bord de la structure composite renforcée par fibres se raccorde au fuselage suivant un angle aigu.

4. Couple étanche (2) d'avion selon la revendication 1, caractérisé par le fait que la structure composite renforcée par fibres est liée au fuselage (1) étanche par une pièce de liaison (3) placée entre celle-ci.

5. Couple étanche (2) d'avion selon l'une des revendications précédentes, caractérisé par le fait que, dans la région du bord (2a), la structure composite renforcée par fibres a une forme de cylindre, de cône ou d'ellipsoïde.

6. Couple étanche (2) d'avion selon l'une des revendications précédentes, caractérisé par le fait que, dans la région du bord (2a), la structure composite renforcée par fibres est renforcée par application de couches de fibres supplémentaires.

7. Couple étanche (2) d'avion selon l'une des revendications précédentes, caractérisé par le fait que, dans la région du bord (2a), la structure composite renforcée par fibres contient des fibres de renfort rigides (fibres de carbone) et, dans la région médiane du couple, des fibres de renfort relativement élastiques (fibres aramides).

8. Couple étanche (2) d'avion selon l'une des revendications précédentes, caractérisé par le fait que, dans la région du bord (2a), la structure composite renforcée par fibres est rigidifiée par des fibres de renfort mono-orientées dans la direction périphérique.

9. Couple étanche (2) d'avion selon l'une des revendications précédentes, caractérisé par le fait qu'en dehors de la région du bord (2a) également, la structure composite renforcée par fibres est pourvue de renforts et de parties épaissies.

10. Couple étanche (2) d'avion selon l'une des revendications précédentes, caractérisé par l'application d'une matière de remplissage, notamment d'une masse moussée, aux fins d'épaissir la structure composite renforcée par fibres.

11. Couple étanche (2) d'avion selon l'une des revendications précédentes, caractérisé par le fait que la structure composite renforcée par fibres est constituée par une matière composite renforcée par fibres difficilement inflammable voire difficilement combustible (matériau composite à base de fibres de carbone) ou est revêtue d'une telle matière (films métalliques).
